# EUROPEAN PATENT APPLICATION

(11) **EP 4 707 740 A1**
(43) Date of publication of application: **11.03.2026**
(21) Application number: 23939657.5
(22) Date of filing: 31.05.2023
(51) Int. Cl.: G01C 21/34

(54) **COMMUNICATION DEVICE, CONTROL METHOD OF COMMUNICATION DEVICE, PROGRAM, AND STORAGE MEDIUM**

(71) Applicant: HONDA MOTOR CO., LTD., Tokyo 105-8404 (JP)
(72) Inventor: NISHIKAWA, Yuji, Tokyo 107-8556 (JP)
(74) Representative: Kiwit, Benedikt
(86) International application number: PCT/JP2023/020330
(87) International publication number: WO 2024/247182

(57) **Abstract**

A communication device comprising: route acquisition means for acquiring information of a guidance route of a vehicle used by a user; and control means for causing an audio output device worn by the user to output audio while the vehicle is traveling on the guidance route, wherein the control means controls left and right audio volumes of the audio in accordance with the guidance route.

## Description

### TECHNICAL FIELD

The present invention relates to a communication device, a control method of the communication device, a program, and a storage medium.

### BACKGROUND ART

Techniques for presenting directions to a user of a vehicle by sound have been conventionally available. Patent Literature 1 discloses a technique for outputting, on a speaker, a non-localized attention attracting sound, and then outputting a warning sound, by which a sound image is localized in a direction of an obstacle, when the obstacle is approaching within a predetermined distance.

### CITATION LIST

### PATENT LITERATURE

PTL1: Japanese Patent Laid-Open No. 2020-123143

### SUMMARY OF INVENTION

### TECHNICAL PROBLEM

Patent Literature 1, however, does not consider a use environment in which the user rides on a motorcycle while using the function of a mobile terminal. For example, no consideration is given to a case where route guidance audio of the mobile terminal is made to output from a headset using wireless communication.

The present invention has been made in view of the above problems, and an object of the present invention is to present the direction of a right turn or a left turn to a user so that a user easily understands the direction in a more intuitive manner in route guidance using a function of a mobile terminal.

### SOLUTION TO PROBLEM

The communication device according to one aspect of the present invention which achieves the above object is a communication device characterized by comprising:
route acquisition means for acquiring information of a guidance route of a vehicle used by a user; and
control means for causing an audio output device worn by the user to output audio while the vehicle is traveling on the guidance route, wherein
the control means controls left and right audio volumes of the audio in accordance with the guidance route.

### ADVANTAGEOUS EFFECTS OF INVENTION

According to the present invention, it becomes possible to present the direction of a right turn or a left turn to the user so that the user easily understands the direction in a more intuitive manner in route guidance using a function of a mobile terminal.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a view for describing a configuration example of an information processing system according to one embodiment.
FIG. 2A is a block diagram for describing a configuration example of an information processing apparatus according to one embodiment.
FIG. 2B is a block diagram for describing a configuration example of an audio output device according to one embodiment.
FIG. 2C is a block diagram for describing a configuration example of a communication device according to one embodiment.
FIG. 2D is a block diagram for describing a configuration example of a vehicle according to one embodiment.
FIG. 3 is a flowchart illustrating a procedure of processing performed by the communication device according to one embodiment.
FIG. 4 is a view illustrating an example of left and right audio volume control in accordance with a travel lane according to one embodiment.
FIG. 5 is a diagram illustrating an example of the left and right audio volume control in accordance with a distance and a course according to one embodiment.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <Configuration>

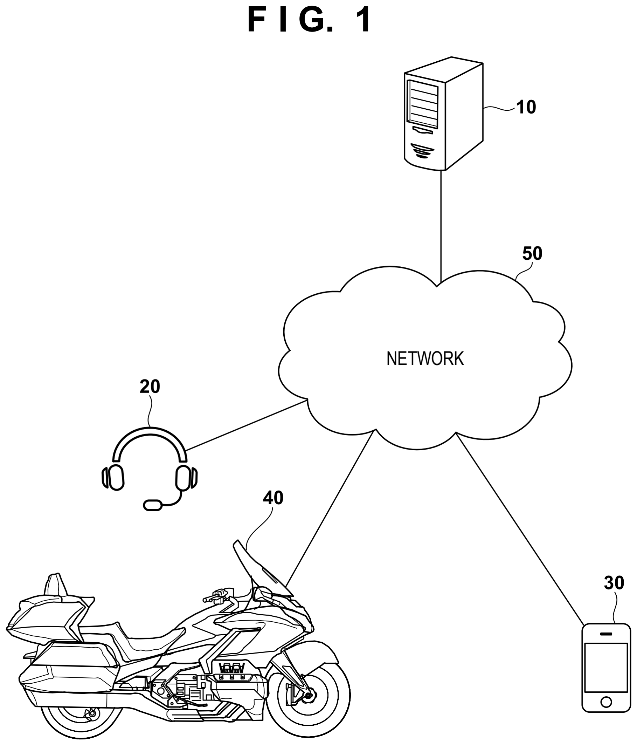

FIG. 1 is a view for describing a configuration of an information processing system according to one embodiment. The information processing system includes: an information processing apparatus 10; an audio output device 20; a communication device 30; and a vehicle 40, and is configured so that the information processing apparatus 10, the audio output device 20, the communication device 30, and the vehicle 40 are capable of communicating with each other via a network 50. In addition, the communication device 30, the audio output device 20, and the vehicle 40 may be capable of communicating with each other by Bluetooth (registered trademark) or the like. The network 50 is, for example, the Internet and/or a local area network (LAN).

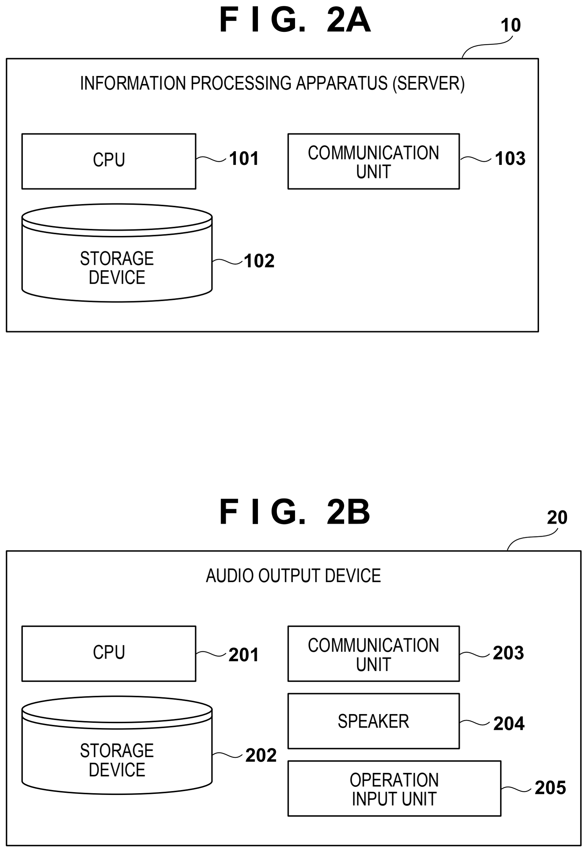

FIGS. 2A to 2D are diagrams respectively illustrating configuration examples of the information processing apparatus 10, the audio output device 20, the communication device 30, and the vehicle 40 according to one embodiment. The information processing apparatus 10 functions as a server apparatus that provides navigation information and the like, and is capable of providing the communication device 30 and/or the vehicle 40 with the navigation information. In the communication device 30, it is possible to install a route guidance application. Regarding the communication device 30, the communication device 30 provides the information processing apparatus 10 with position information, and receives navigation information corresponding to the position information from the information processing apparatus 10. Then, the received navigation information is transmitted to the audio output device 20. The audio output device 20 is capable of outputting the navigation information as audio guidance to notify the user. The audio is, for example, guidance audio for giving route guidance to the vehicle 40, based on a guidance route.

As illustrated in FIG. 2A, the information processing apparatus 10 functions as a server apparatus, and includes a CPU 101, a storage device 102, and a communication unit 103. The CPU 101 includes one or more CPUs, and performs processing by reading and executing a program stored in the storage device 102. The storage device 102 is a storage medium and/or a memory that stores various types of information. The storage device 102 is capable of storing the program to be read and executed by the CPU 101, and is also capable of storing information that has been acquired from the audio output device 20, the communication device 30 and/or the vehicle 40 via the communication unit 103. The storage device 102 is capable of storing, for example, information of a current location and/or a destination location that has been received from the audio output device 20, the communication device 30 and/or the vehicle 40, information of a congestion situation of a road network based on the location information and the like of a large number of vehicles. The communication unit 103 communicates with the audio output device 20, the communication device 30, and/or the vehicle 40, and is capable of transmitting and receiving various types of information (navigation information and the like) on wired or wireless communication.

The audio output device 20 is an earphone or a headset to be worn by a user (an occupant) of the vehicle in left and right ears. In addition, the audio output device 20 may be a three-dimensional audio output device incorporated in a helmet to be worn by the user.

As illustrated in FIG. 2B, the audio output device 20 includes a CPU 201, a storage device 202, a communication unit 203, a speaker 204, and an operation input unit 205. The CPU 201 includes one or more CPUs, and controls the operation of the audio output device 20 by reading and executing a program stored in the storage device 202. The storage device 202 is a storage medium and/or a memory that stores a program to be read and executed by the CPU 201 and that also stores various types of information that has been input into the communication device 30 via the operation input unit 205. The communication unit 203 communicates with the information processing apparatus 10, the communication device 30, and/or the vehicle 40, and is capable of transmitting and receiving various types of information on wired or wireless communication. The speaker 204 is capable of outputting various sounds to the left and right ears of the user. The operation input unit 305 is a physical button or the like, and the user is able to input various types of information (for example, a volume increase or decrease instruction or the like) by operating the operation input unit 205.

The communication device 30 is a portable information terminal such as a smartphone to be carried by a user (for example, the occupant of the vehicle 40). It is possible to install a route guidance application in the communication device 30. The user is able to input information of a departure location (or a current location) and a destination location (or a transit location) via the communication device 30. The information that has been input is transmitted to the information processing apparatus 10, and navigation information based on the information is provided from the information processing apparatus 10. The communication device 30 is capable of displaying the navigation information provided from the information processing apparatus 10, and communicating with the audio output device 20 to output audio guidance based on the navigation information.

In addition, the communication device 30 is capable of functioning as, for example, an electronic key (a smart key) of the vehicle 40. By using the communication device 30, the user is able to cause the engine of the vehicle 40 to be capable of starting up. The communication device 30 may be connected with the vehicle 40 to receive the supply of electric power from the vehicle 40, and may be capable of charging the battery of the communication device 30.

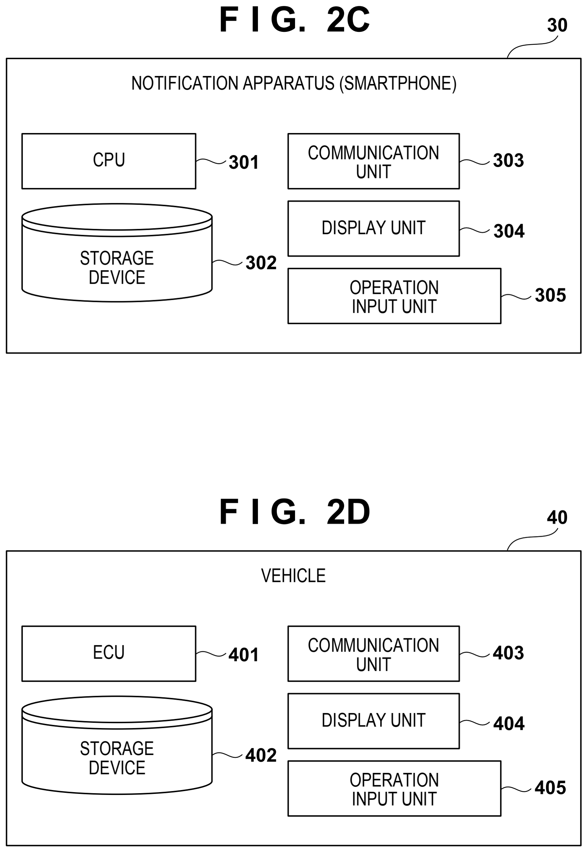

As illustrated in FIG. 2C, the communication device 30 includes a CPU 301, a storage device 302, a communication unit 303, a display unit 304, and an operation input unit 305. The CPU 301 includes one or more CPUs, and controls the operation of the communication device 30 by reading and executing a program stored in the storage device 302. The storage device 302 is a storage medium and/or a memory that stores a program to be read and executed by the CPU 301 and that also stores various types of information that has been input into the communication device 30 via the operation input unit 305. The communication unit 303 communicates with the information processing apparatus 10, the audio output device 20, and/or the vehicle 40, and is capable of transmitting and receiving various types of information on wired or wireless communication. For example, the communication unit 303 communicates with the audio output device 20, and is capable of outputting the navigation information by audio.

The display unit 304 is a liquid crystal display or the like, and displays various types of information. The operation input unit 305 is a physical button, a touch input unit, a mouse, a keyboard, or the like, and the user is able to input various types of information by operating the operation input unit 305. In a case where the display unit 304 is a touch panel, the display unit 304 may also function as the operation input unit 305.

The vehicle 40 is, for example, a straddle type vehicle. As illustrated in FIG. 2D, the vehicle 40 includes an electronic control unit (ECU) 401, a storage device 402, a communication unit 403, a display unit 404, and an operation input unit 405. The user is able to control the engine of the vehicle 40 to be capable of starting up, by using the communication device 30 as an electronic key, and is able to release various locks of the vehicle 40. The vehicle 40 may be connected with the communication device 30 to supply the communication device 30 with electric power, and may be capable of charging the battery of the communication device 30. For example, the vehicle 40 may include a connection interface for connecting a charging cable extending from the communication device 30.

The ECU 401 includes one or more CPUs, one or more memories, and one or more communication interfaces, and functions as a controller that controls the operation of the vehicle. Predetermined processing is performed by the CPU, based on information (data or electric signal) that has been received via the communication interface, and its processing result is stored in the storage device 402, or is output to another element via the communication interface. The CPU reads and executes a program stored in the memory or the storage device 402 to control the operation of the vehicle 40. The storage device 402 is a storage medium and/or a memory that stores a program to be read and executed by the CPU and that also stores various types of information that has been input into the vehicle 40 via the operation input unit 405.

The communication unit 403 communicates with the information processing apparatus 10, the audio output device 20, and/or the communication device 30, and is capable of transmitting and receiving various types of information on wired or wireless communication. The display unit 404 is a liquid crystal display or the like, and includes one or more display units that display various types of information. The operation input unit 405 is a physical button, a rotation mechanism, a touch panel, or the like, and a driver (the user) is able to input various types of information by operating the operation input unit 405.

### <Processing>

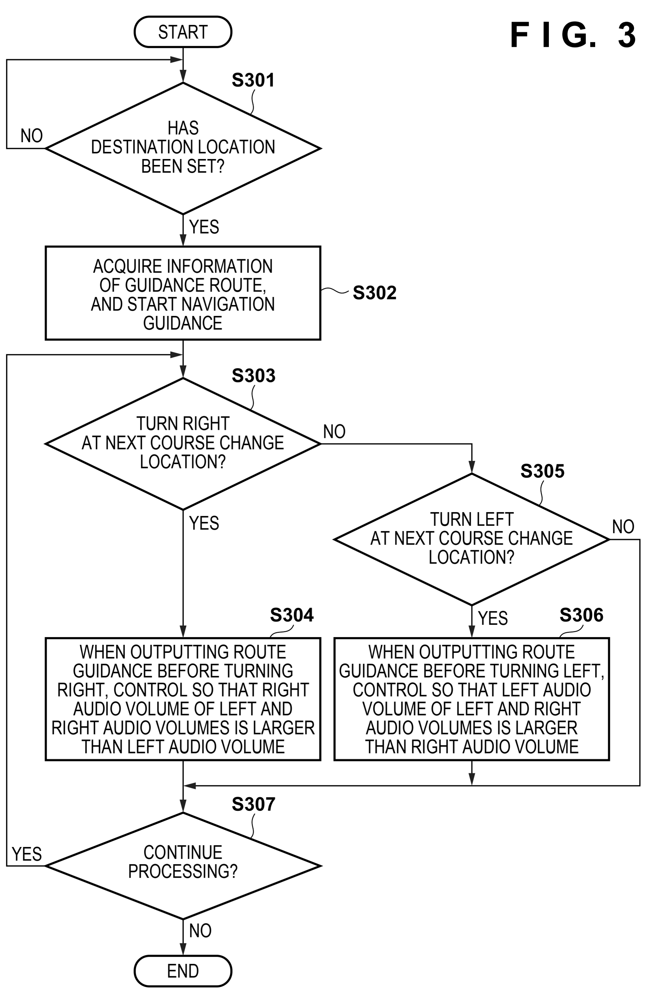

FIG. 3 is a flowchart illustrating a procedure of processing performed by the communication device 30 according to the present embodiment. This processing is performed by the CPU 301 of the communication device 30 reading and executing a program stored in the storage device 302.

In step S301, the CPU 301 determines whether a destination location has been set by the user. In a case where the determination in this step is Yes, the processing proceeds to step S302. On the other hand, in a case where the determination in this step is No, the processing is on standby.

In step S302, the CPU 301 acquires information of a guidance route to a destination location from the information processing apparatus 10, and starts navigation guidance along the guidance route.

In step S303, the CPU 301 determines whether to turn to the right at a next course change location (for example, an intersection) along the guidance route. In a case where the determination in this step is Yes, the processing proceeds to step S304. On the other hand, in a case where the determination in this step is No, the processing proceeds to step S305.

In step S304, when outputting the route guidance before turning to the right, the CPU 301 conducts control so that a right audio volume of left and right audio volumes is larger than a left audio volume. For example, the CPU 301 communicates with the audio output device 20 via the communication unit 303, and controls the right audio volume corresponding to the right turn to be larger than the left audio volume, when causing the audio guidance "Please turn to the right at the next intersection" to be output before the right turn. For example, the output is made to be imbalanced so that the left audio volume : the right audio volume = 10% : 90%. That is, control is conducted so that the left audio volume is 10% of the previous output volume and the right audio volume is 90% of the previous output volume. In this case, since the entire volume level is lower than the previous one, control for increasing the entire volume level may be conducted together. That is, the left and right audio volume levels may be increased while the ratio between the left and right audio volumes is maintained. For example, control may be conducted to increase the entire volume level by two levels. Accordingly, even though the user misses the contents of the audio guidance, the user is able to recognize that the user should turn to the right at the next intersection by relying on the fact that a larger sound is heard from the right ear. Therefore, the number of times of the audio guidance can be reduced, and it becomes possible to suppress distraction of user's attention to driving due to the audio guidance.

In step S305, the CPU 301 determines whether to turn to the left at the next course change location (for example, an intersection) along the guidance route. In a case where the determination in this step is Yes, the processing proceeds to step S306. On the other hand, in a case where the determination in this step is No, the audio volumes are not made to be imbalanced between the left and the right in order to advance in a straight forward direction. That is, the audio guidance "Please go straight at the next intersection" is output at the same volume on the left and the right. Alternatively, when the vehicle travels in the straight forward direction, the audio guidance may not necessarily be output in particular. Then, the processing proceeds to step S307.

In step S306, when outputting the route guidance before turning to the left, the CPU 301 conducts control so that the left audio volume of the left and right audio volumes is larger than the right audio volume. For example, the CPU 301 communicates with the audio output device 20 via the communication unit 303, and controls the left audio volume corresponding to the left turn to be larger than the right audio volume, when causing the audio guidance "Please turn to the left at the next intersection" to be output before the left turn.

For example, the output is made to be imbalanced so that the left audio volume : the right audio volume = 90% : 10%. That is, control is conducted so that the left audio volume is 90% of the previous output volume and the right audio volume is 10% of the previous output volume. In this case, since the entire volume level is lower than the previous one, control for increasing the entire volume level may be conducted together. That is, the left and right audio volume levels may be increased while the ratio between the left and right audio volumes is maintained. Accordingly, even though the user misses the contents of the audio guidance, the user is able to recognize that the user should turn to the left at the next intersection by relying on the fact that a larger sound is heard from the left ear. Therefore, the number of times of the audio guidance can be reduced, and it becomes possible to suppress distraction of user's attention to driving due to the audio guidance.

In step S307, the CPU 301 determines whether to continue the processing. In a case where the vehicle has not reached the destination location along the guidance route, it is possible to determine that the processing is to continue. In a case where the determination in this step is Yes, the processing returns to step S303. On the other hand, in a case where the determination in this step is No, the processing ends. Furthermore, when the user inputs an instruction to stop the route guidance via any one of the audio output device 20, the communication device 30, and the vehicle 40, the processing may be configured to end.

As described heretofore, in the present embodiment, when outputting the audio guidance along the guidance route, control is conducted to cause one of the left and right audio volumes to be larger. Accordingly, it becomes possible to present the direction of the right turn or the left turn to the user so that the user easily understands the direction in a more intuitive manner in the route guidance using the function of the mobile terminal. Furthermore, even though the contents of the audio guidance are missed, it becomes possible to presume the direction of the right turn or the left turn at the next course change location, by relying on which one of the left and right audio volumes is larger. Thus, more intuitive understanding is enabled, and it becomes possible to suppress deviation from the guidance route.

### [First Modification]

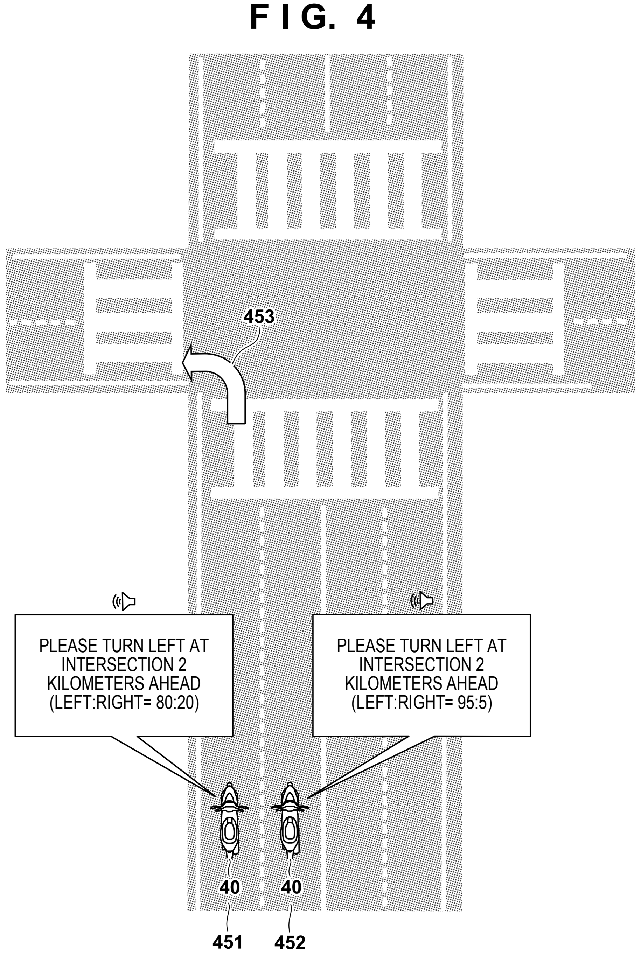

Next, a modification of the above embodiment will be described with reference to FIG. 4. FIG. 4 is a schematic view illustrating a situation in which the vehicle 40 is traveling along a guidance route and the vehicle 40 is scheduled to turn to the left as indicated by an arrow 453 at an intersection. When the vehicle 40 (that is, the communication device 30) travels in a travel lane 451 of a road having two lanes on each side, audio guidance "Please turn to the left at an intersection two kilometers ahead" is output to be imbalanced so that the left audio volume : the right audio volume = 80% : 20%. On the other hand, when the vehicle 40 (that is, the communication device 30) travels in a travel lane 452 of the road having two lanes on each side, audio guidance "Please turn to the left at an intersection two kilometers ahead" is output to be imbalanced so that the left audio volume : the right audio volume = 95% : 5%. Note that it is possible to identify in which lane of the road having two lanes on each side the vehicle 40 (the communication device 30) is traveling, by using, for example, a high definition map. For example, the information processing apparatus 10 may hold all data of a high definition map having a large data capacity, and the communication device 30 may be configured to download data of such a high definition map within a predetermined range from the current location from the information processing apparatus 10 to use the data, and may sequentially delete unnecessary data after traveling along the guidance route.

In this manner, in a case where it is necessary to change travel lanes for turning to the left at the intersection, control is conducted to be largely imbalanced between the volumes so that the left audio volume corresponding to the left turn becomes further larger than the right audio volume. This enables the user to more intuitively recognize that it is necessary to change lanes to the left travel lane in order to turn to the left.

Note that the same reasoning also applies to a situation in which the vehicle 40 is traveling along a guidance route and the vehicle 40 is scheduled to turn to the right at an intersection. In a case where it is necessary to turn to the right at the intersection and the vehicle 40 (the communication device 30) is traveling in the travel lane 452, it is not necessary to change lanes. Thus, the audio guidance "Please turn to the right at an intersection two kilometers ahead" is output to be imbalanced so that the left audio volume : the right audio volume = 20% : 80%.

On the other hand, in a case where it is necessary to turn to the right at the intersection and the vehicle 40 (the communication device 30) is traveling in the travel lane 451, it is necessary to change lanes. Thus, audio guidance "Please turn to the right at an intersection two kilometers ahead" is output to be largely imbalanced between the volumes so that the left audio volume: the right audio volume = 5%: 95%. This enables the user to more intuitively recognize that it is necessary to change lanes to the right travel lane in order to turn to the right.

Note that although the description has been made with regard to the road having two lanes on each side as an example in FIG. 4, the present first modification is also applicable to a road having three or more lanes on each side. For example, in a case of turning to the left at an intersection, control may be conducted to be more largely imbalanced for the left audio volume corresponding to the left turn, as the vehicle 40 is traveling in a travel lane farther from a travel lane where it is possible to turn to the left on the road having three lanes on each side. The same reasoning also applies to a case of the right turn.

### [Second Modification]

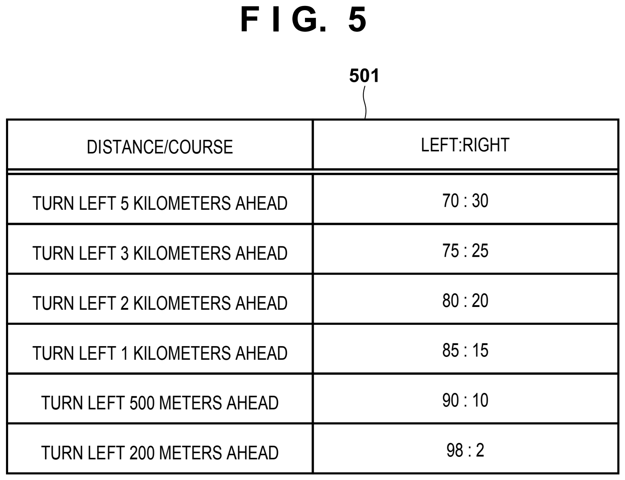

Next, a modification of the above embodiment will be described with reference to FIG. 5. In the present modification, description will be made with regard to an example of changing an imbalanced situation between the left and right audio volumes of the audio output device 20 in accordance with the distance to a course change location (for example, an intersection) along the guidance route.

For example, when turning to the left at a course change location and the distance to the course change location is five kilometers as indicated in 501 of FIG. 5, audio guidance "Please turn to the left five kilometers ahead" is output so that the left audio volume : the right audio volume = 70% : 30%. When the distance to the course change location is three kilometers, audio guidance "Please turn to the left three kilometers ahead" is output so that the left audio volume : the right audio volume = 75% : 25%. When the distance to the course change location is two kilometers, audio guidance "Please turn to the left two kilometers ahead" is output so that the left audio volume: the right audio volume = 80% : 20%. When the distance to the course change location is one kilometer, audio guidance "Please turn to the left one kilometer ahead" is output so that the left audio volume : the right audio volume = 85% : 15%. When the distance to the course change location is 500 meters, audio guidance "Please turn to the left 500 meters ahead" is output so that the left audio volume : the right audio volume = 90% : 10%. When the distance to the course change location is 200 meters, audio guidance "Please turn to the left 200 meters ahead" is output so that the left audio volume : the right audio volume = 98% : 2%.

In this manner, the control may be conducted to be largely imbalanced between the left and right audio volumes, as the distance to the course change location is shorter. In this situation, when one of the left and right audio volumes is output largely, the other one may be controlled to be larger than zero. This enables the user to intuitively recognize that the audio output device does not malfunction, and functions normally.

In addition, as the distance to the course change location decreases, the entire volume level at the time of giving the audio guidance may increase. That is, while conducting the control as the table indicated by 501, control may be conducted to increase the entire audio volume level, as the distance decreases.

### [Other Modifications]

Note that in the above embodiment, the description has been made with regard to the case where the audio output device 20 is a headset or an earphone as an example, but there is no limitation to this example. As described above, the audio output device 20 may be a three-dimensional audio output device incorporated in a helmet to be worn by the user. The three-dimensional audio output device is capable of outputting audio from any position of the helmet regardless of the orientation of the helmet. For example, even though the user faces sideways, or faces up or down, it is possible to conduct control to output the audio from the position of the helmet corresponding to, for example, a left turning direction at the intersection.

For example, by incorporating an acceleration sensor in the helmet, it becomes possible to recognize the orientation of the neck of the user who wears the helmet. A case of turning to the left at the next course change location (for example, an intersection) will be described as an example. When the user's neck is oriented in the advancing direction, the left turning direction at the intersection corresponds to the left front of the helmet, and thus the audio is output from the left front of the helmet. When the user's neck is oriented toward left oblique front with respect to the advancing direction, the left turning direction at the intersection corresponds to the front of the helmet, and thus the audio is output from the front of the helmet. When the user's neck is oriented toward right oblique front with respect to the advancing direction, the left turning direction at the intersection corresponds to the left rear of the helmet, and thus the audio is output from the left rear of the helmet. This enables the audio guidance to be output always from the position of the helmet corresponding to the left turning direction at the intersection.

In addition, in the above-described embodiment, the description has been made with regard to an example in which the communication device 30 (for example, a smartphone) controls the audio output device 20 to perform processing, but there is no limitation to this example. In a case where the vehicle 40 has a navigation function, the vehicle 40 may be configured to control the audio output device 20 to perform a series of processing.

In addition, downloading information of the guidance route from the information processing apparatus 10 (the server apparatus) to the communication device 30 (for example, a smartphone) may be completed beforehand. In such a case, if Bluetooth (registered trademark) communication is established between the communication device 30 (for example, a smartphone) and the audio output device 20 (for example, a headset), the processing according to the present invention can be performed with the information processing apparatus 10 (the server apparatus) without additional communication.

### <Summary of embodiments>

1. A communication device (30) according to the above embodiments comprising:
   route acquisition means (301, 303) for acquiring information of a guidance route of a vehicle (40) used by a user; and
   control means (301, 303) for causing an audio output device (20) worn by the user to output audio while the vehicle is traveling on the guidance route, wherein
   the control means controls left and right audio volumes of the audio in accordance with the guidance route.

According to this embodiment, it becomes possible to present the direction of the right turn or the left turn to the user so that the user easily understands the direction in a more intuitive manner in the route guidance using the function of the mobile terminal. Furthermore, even though the contents of the audio guidance are missed, it becomes possible to presume the direction of the right turn or the left turn at the next course change location, by relying on which one of the left and right audio volumes is larger. Thus, more intuitive understanding is enabled, and it becomes possible to suppress deviation from the guidance route.

2. The communication device (30) according to the above embodiments, wherein the control means causes one of the left and right audio volumes of the audio to be larger than the other one before the vehicle turns to the left or right on the guidance route.

According to this embodiment, it becomes possible to presume the direction of the right turn or the left turn at the next course change location from an imbalanced degree of the left and right audio volumes, and thus, it becomes possible to suppress deviation from the guidance route, even though the user misses the contents of the audio guidance.

3. The communication device (30) according to the above embodiments, wherein when the control means causes one of the left and right audio volumes of the audio to be larger than the other one before the vehicle turns to the left or the right on the guidance route, the control means controls an audio volume of the other one to be larger than zero.

According to this embodiment, both the left and right audio volumes are controlled to be heard, and thus it becomes possible to prevent the user from misunderstanding that the audio output device has malfunctioned.

4. The communication device (30) according to the above embodiments, wherein when the control means causes one of the left and right audio volumes of the audio to be larger than the other one before the vehicle turns to the left or the right on the guidance route, the control means increases an entire audio volume level.

According to this embodiment, it becomes possible to avoid a situation in which it is difficult to hear the audio guidance due to imbalance between the left and right audio volumes.

5. The communication device (30) according to the above embodiments, wherein when the control means causes one of the left and right audio volumes of the audio to be larger than the other one before the vehicle turns to the left or the right on the guidance route, the control means controls its ratio to be 9 : 1.

According to this embodiment, it is easy to intuitively recognize the direction of the next right turn or left turn.

6. The communication device (30) according to the above embodiments, wherein the control means controls a right audio volume of the left and right audio volumes to be larger than a left audio volume, before the vehicle turns to the right on the guidance route.

According to this embodiment, it is easy to intuitively recognize that it is necessary to turn to the right at the next course change location.

7. The communication device (30) according to the above embodiments, wherein the control means controls a left audio volume of the left and right audio volumes to be larger than a right audio volume, before the vehicle turns to the left on the guidance route.

According to this embodiment, it is easy to intuitively recognize that it is necessary to turn to the left at the next course change location.

8. The communication device (30) according to the above embodiments, wherein the control means changes a degree of causing one of the left and right audio volumes of the audio to be larger than the other one, based on a distance to a course change location on the guidance route.

According to this embodiment, it becomes possible to achieve appropriate audio guidance in accordance with the distance to the course change location.

9. The communication device (30) according to the above embodiments, wherein the control means changes and increases the degree of causing one of the left and right audio volumes of the audio to be larger than the other one, as the distance decreases.

According to this embodiment, as the distance to the course change location is shorter, it is easier to intuitively recognize the course at the course change location.

10. The communication device (30) according to the above embodiments, wherein
the control means controls a ratio of a right audio volume to a left audio volume of the left and right audio volumes of the audio to be a first ratio, while the vehicle is traveling in a lane from which the vehicle is capable of turning to right before the vehicle turns to the right on the guidance route, and
the control means controls the ratio of the right audio volume to the left audio volume to be a second ratio, the second ratio being larger than the first ratio, while the vehicle is not traveling in the lane from which the vehicle is capable of turning to the right before the vehicle turns to the right on the guidance route.

According to this embodiment, in a case where it is necessary to change lanes in turning to the right at the course change location, the right audio volume is heard relatively more loudly than the left audio volume, and thus, it becomes possible to prompt the user to change lanes promptly.

11. The communication device (30) according to the above embodiments, wherein
the control means controls a ratio of a left audio volume to a right audio volume of the left and right audio volumes of the audio to be a first ratio, while the vehicle is traveling in a lane from which the vehicle is capable of turning to left before the vehicle turns to the left on the guidance route, and
the control means controls the ratio of the left audio volume to the right audio volume to be a second ratio, the second ratio being larger than the first ratio, while the vehicle is not traveling in the lane from which the vehicle is capable of turning to the left before the vehicle turns to the left on the guidance route.

According to this embodiment, in a case where it is necessary to change lanes in turning to the left at the course change location, the left audio volume is heard relatively more loudly than the right audio volume, and thus, it becomes possible to prompt the user to change lanes promptly.

12. The communication device (30) according to the above embodiments, wherein
the audio output device is a three-dimensional audio output device incorporated in a helmet to be worn by the user, and
regardless of an orientation of the helmet, the audio output device outputs the audio from a position of the helmet corresponding to a direction of a left turn or a right turn before the vehicle turns to the left or right on the guidance route.

According to this embodiment, the audio is output from the direction corresponding to the right turn or the left turn at the course change location regardless of the orientation of the neck of the user who wears the helmet, and thus more intuitive understanding is enabled.

13. The communication device (30) according to the above embodiments, wherein the audio is a guidance audio that gives route guidance to the vehicle, based on the guidance route.

According to this embodiment, in the guidance audio for giving the route guidance, it becomes possible to present the direction of the right turn or the left turn to the user so as to easily understand in a more intuitive manner.

14. A control method of a communication device (30) according to the above embodiments, comprising:
a route acquisition step (S302) of acquiring information of a guidance route of a vehicle (40) used by a user; and
a control step (S303-S306) of causing an audio output device (20) worn by the user to output audio while the vehicle is traveling on the guidance route, wherein
the control step controls left and right audio volumes of the audio in accordance with the guidance route.

According to this embodiment, it becomes possible to present the direction of the right turn or the left turn to the user so that the user easily understands the direction in a more intuitive manner in the route guidance using the function of the mobile terminal. Furthermore, even though the contents of the audio guidance are missed, it becomes possible to presume the direction of the right turn or the left turn at the next course change location, by relying on which one of the left and right audio volumes is larger. Thus, more intuitive understanding is enabled, and it becomes possible to suppress deviation from the guidance route.

15. The control method of the communication device (30) according to the above embodiments, wherein the control step causes one of the left and right audio volumes of the audio to be larger than the other one before the vehicle turns to the left or right on the guidance route.

According to this embodiment, it becomes possible to presume the direction of the right turn or the left turn at the next course change location from an imbalanced degree of the left and right audio volumes, and thus, it becomes possible to suppress deviation from the guidance route, even though the user misses the contents of the audio guidance.

16. The control method of the communication device (30) according to the above embodiments, wherein when the control step causes one of the left and right audio volumes of the audio to be larger than the other one before the vehicle turns to the left or the right on the guidance route, the control step controls an audio volume of the other one to be larger than zero.

According to this embodiment, both the left and right audio volumes are controlled to be heard, and thus it becomes possible to prevent the user from misunderstanding that the audio output device has malfunctioned.

17. The control method of the communication device (30) according to the above embodiments, wherein when the control step causes one of the left and right audio volumes of the audio to be larger than the other one before the vehicle turns to the left or the right on the guidance route, the control step increases an entire audio volume level.

According to this embodiment, it becomes possible to avoid a situation in which it is difficult to hear the audio guidance due to imbalance between the left and right audio volumes.

18. The control method of the communication device (30) according to the above embodiments, wherein when the control step causes one of the left and right audio volumes of the audio to be larger than the other one before the vehicle turns to the left or the right on the guidance route, the control step controls its ratio to be 9 : 1.

According to this embodiment, it is easy to intuitively recognize the direction of the next right turn or left turn.

19. The control method of the communication device (30) according to the above embodiments, wherein the control step controls a right audio volume of the left and right audio volumes to be larger than a left audio volume, before the vehicle turns to the right on the guidance route.

According to this embodiment, it is easy to intuitively recognize that it is necessary to turn to the right at the next course change location.

20. The control method of the communication device (30) according to the above embodiments, wherein the control step controls a left audio volume of the left and right audio volumes to be larger than a right audio volume, before the vehicle turns to the left on the guidance route.

According to this embodiment, it is easy to intuitively recognize that it is necessary to turn to the left at the next course change location.

21. The control method of the communication device (30) according to the above embodiments, wherein the control step changes a degree of causing one of the left and right audio volumes of the audio to be larger than the other one, based on a distance to a course change location on the guidance route.

According to this embodiment, it becomes possible to achieve appropriate audio guidance in accordance with the distance to the course change location.

22. The control method of the communication device (30) according to the above embodiments, wherein the control step changes and increases the degree of causing one of the left and right audio volumes of the audio to be larger than the other one, as the distance decreases.

According to this embodiment, as the distance to the course change location is shorter, it is easier to intuitively recognize the course at the course change location.

23. The control method of the communication device (30) according to the above embodiments, wherein
the control step controls a ratio of a right audio volume to a left audio volume of the left and right audio volumes of the audio to be a first ratio, while the vehicle is traveling in a lane from which the vehicle is capable of turning to right before the vehicle turns to the right on the guidance route, and
the control step controls the ratio of the right audio volume to the left audio volume to be a second ratio, the second ratio being larger than the first ratio, while the vehicle is not traveling in the lane from which the vehicle is capable of turning to the right before the vehicle turns to the right on the guidance route.

According to this embodiment, in a case where it is necessary to change lanes in turning to the right at the course change location, the right audio volume is heard relatively more loudly than the left audio volume, and thus, it becomes possible to prompt the user to change lanes promptly.

24. The control method of the communication device (30) according to the above embodiments, wherein
the control step controls a ratio of a left audio volume to a right audio volume of the left and right audio volumes of the audio to be a first ratio, while the vehicle is traveling in a lane from which the vehicle is capable of turning to left before the vehicle turns to the left on the guidance route, and
the control step controls the ratio of the left audio volume to the right audio volume to be a second ratio, the second ratio being larger than the first ratio, while the vehicle is not traveling in the lane from which the vehicle is capable of turning to the left before the vehicle turns to the left on the guidance route.

According to this embodiment, in a case where it is necessary to change lanes in turning to the left at the course change location, the left audio volume is heard relatively more loudly than the right audio volume, and thus, it becomes possible to prompt the user to change lanes promptly.

25. The control method of the communication device (30) according to the above embodiments, wherein the audio output device is a three-dimensional audio output device incorporated in a helmet to be worn by the user, and
regardless of an orientation of the helmet, the audio output device outputs the audio from a position of the helmet corresponding to a direction of a left turn or a right turn before the vehicle turns to the left or right on the guidance route.

According to this embodiment, the audio is output from the direction corresponding to the right turn or the left turn at the course change location regardless of the orientation of the neck of the user who wears the helmet, and thus more intuitive understanding is enabled.

26. The control method of the communication device (30) according to the above embodiments, wherein the audio is a guidance audio that gives route guidance to the vehicle, based on the guidance route.

According to this embodiment, in the guidance audio for giving the route guidance, it becomes possible to present the direction of the right turn or the left turn to the user so as to easily understand in a more intuitive manner.

27. The program according to the above embodiments is a program for causing a computer to function as the communication device according to the above embodiments.

According to this embodiment, it becomes possible to achieve the function of the communication device as a program.

28. The storage medium according to the above embodiments is a storage medium storing a program for causing a computer to function as the communication device according to the above embodiments.

According to this embodiment, it becomes possible to achieve the function of the communication device as a memory medium.

The invention is not limited to the foregoing embodiments, and various variations/changes are possible within the spirit of the invention.

### REFERENCE SIGNS LIST

- 10: Information processing apparatus
- 20: Audio output device
- 30: Communication device
- 40: Vehicle

## Claims

1. A communication device **characterized by** comprising:
route acquisition means for acquiring information of a guidance route of a vehicle used by a user; and
control means for causing an audio output device worn by the user to output audio while the vehicle is traveling on the guidance route, wherein
the control means controls left and right audio volumes of the audio in accordance with the guidance route.

2. The communication device according to claim 1, **characterized in that** the control means causes one of the left and right audio volumes of the audio to be larger than the other one before the vehicle turns to the left or right on the guidance route.

3. The communication device according to claim 2, **characterized in that** when the control means causes one of the left and right audio volumes of the audio to be larger than the other one before the vehicle turns to the left or the right on the guidance route, the control means controls an audio volume of the other one to be larger than zero.

4. The communication device according to claim 2, **characterized in that** when the control means causes one of the left and right audio volumes of the audio to be larger than the other one before the vehicle turns to the left or the right on the guidance route, the control means increases an entire audio volume level.

5. The communication device according to claim 2, **characterized in that** when the control means causes one of the left and right audio volumes of the audio to be larger than the other one before the vehicle turns to the left or the right on the guidance route, the control means controls its ratio to be 9 : 1.

6. The communication device according to claim 1, **characterized in that** the control means controls a right audio volume of the left and right audio volumes to be larger than a left audio volume, before the vehicle turns to the right on the guidance route.

7. The communication device according to claim 1, **characterized in that** the control means controls a left audio volume of the left and right audio volumes to be larger than a right audio volume, before the vehicle turns to the left on the guidance route.

8. The communication device according to claim 1, **characterized in that** the control means changes a degree of causing one of the left and right audio volumes of the audio to be larger than the other one, based on a distance to a course change location on the guidance route.

9. The communication device according to claim 8, **characterized in that** the control means changes and increases the degree of causing one of the left and right audio volumes of the audio to be larger than the other one, as the distance decreases.

10. The communication device according to claim 1, **characterized in that**
the control means controls a ratio of a right audio volume to a left audio volume of the left and right audio volumes of the audio to be a first ratio, while the vehicle is traveling in a lane from which the vehicle is capable of turning to right before the vehicle turns to the right on the guidance route, and
the control means controls the ratio of the right audio volume to the left audio volume to be a second ratio, the second ratio being larger than the first ratio, while the vehicle is not traveling in the lane from which the vehicle is capable of turning to the right before the vehicle turns to the right on the guidance route.

11. The communication device according to claim 1, **characterized in that**
the control means controls a ratio of a left audio volume to a right audio volume of the left and right audio volumes of the audio to be a first ratio, while the vehicle is traveling in a lane from which the vehicle is capable of turning to left before the vehicle turns to the left on the guidance route, and
the control means controls the ratio of the left audio volume to the right audio volume to be a second ratio, the second ratio being larger than the first ratio, while the vehicle is not traveling in the lane from which the vehicle is capable of turning to the left before the vehicle turns to the left on the guidance route.

12. The communication device according to claim 1, **characterized in that**
the audio output device is a three-dimensional audio output device incorporated in a helmet to be worn by the user, and
regardless of an orientation of the helmet, the audio output device outputs the audio from a position of the helmet corresponding to a direction of a left turn or a right turn before the vehicle turns to the left or right on the guidance route.

13. The communication device according to claim 1, **characterized in that** the audio is a guidance audio that gives route guidance to the vehicle, based on the guidance route.

14. A control method of a communication device, **characterized by** comprising:
a route acquisition step of acquiring information of a guidance route of a vehicle used by a user; and
a control step of causing an audio output device worn by the user to output audio while the vehicle is traveling on the guidance route, wherein
the control step controls left and right audio volumes of the audio in accordance with the guidance route.

15. The control method of the communication device according to claim 14, **characterized in that** the control step causes one of the left and right audio volumes of the audio to be larger than the other one before the vehicle turns to the left or right on the guidance route.

16. The control method of the communication device according to claim 15, **characterized in that** when the control step causes one of the left and right audio volumes of the audio to be larger than the other one before the vehicle turns to the left or the right on the guidance route, the control step controls an audio volume of the other one to be larger than zero.

17. The control method of the communication device according to claim 15, **characterized in that** when the control step causes one of the left and right audio volumes of the audio to be larger than the other one before the vehicle turns to the left or the right on the guidance route, the control step increases an entire audio volume level.

18. The control method of the communication device according to claim 15, **characterized in that** when the control step causes one of the left and right audio volumes of the audio to be larger than the other one before the vehicle turns to the left or the right on the guidance route, the control step controls its ratio to be 9 : 1.

19. The control method of the communication device according to claim 14, **characterized in that** the control step controls a right audio volume of the left and right audio volumes to be larger than a left audio volume, before the vehicle turns to the right on the guidance route.

20. The control method of the communication device according to claim 14, **characterized in that** the control step controls a left audio volume of the left and right audio volumes to be larger than a right audio volume, before the vehicle turns to the left on the guidance route.

21. The control method of the communication device according to claim 14, **characterized in that** the control step changes a degree of causing one of the left and right audio volumes of the audio to be larger than the other one, based on a distance to a course change location on the guidance route.

22. The control method of the communication device according to claim 21, **characterized in that** the control step changes and increases the degree of causing one of the left and right audio volumes of the audio to be larger than the other one, as the distance decreases.

23. The control method of the communication device according to claim 14, **characterized in that**
the control step controls a ratio of a right audio volume to a left audio volume of the left and right audio volumes of the audio to be a first ratio, while the vehicle is traveling in a lane from which the vehicle is capable of turning to right before the vehicle turns to the right on the guidance route, and
the control step controls the ratio of the right audio volume to the left audio volume to be a second ratio, the second ratio being larger than the first ratio, while the vehicle is not traveling in the lane from which the vehicle is capable of turning to the right before the vehicle turns to the right on the guidance route.

24. The control method of the communication device according to claim 14, **characterized in that**
the control step controls a ratio of a left audio volume to a right audio volume of the left and right audio volumes of the audio to be a first ratio, while the vehicle is traveling in a lane from which the vehicle is capable of turning to left before the vehicle turns to the left on the guidance route, and
the control step controls the ratio of the left audio volume to the right audio volume to be a second ratio, the second ratio being larger than the first ratio, while the vehicle is not traveling in the lane from which the vehicle is capable of turning to the left before the vehicle turns to the left on the guidance route.

25. The control method of the communication device according to claim 14, **characterized in that** the audio output device is a three-dimensional audio output device incorporated in a helmet to be worn by the user, and
regardless of an orientation of the helmet, the audio output device outputs the audio from a position of the helmet corresponding to a direction of a left turn or a right turn before the vehicle turns to the left or right on the guidance route.

26. The control method of the communication device according to claim 14, **characterized in that** the audio is a guidance audio that gives route guidance to the vehicle, based on the guidance route.

27. A program for causing a computer to function as the communication device according to any one of claims 1 to 13.

28. A storage medium storing a program for causing a computer to function as the communication device according to any one of claims 1 to 13.
